# EUROPEAN PATENT SPECIFICATION

(11) **EP 3 065 922 B1**
(45) Date of publication and mention of the grant of the patent: **21.02.2018**
(21) Application number: 14790647.3
(22) Date of filing: 30.10.2014
(51) Int. Cl.: B26D 3/28, B26D 7/08, C10M 145/26, C10M 173/00, A23L 19/12, A23L 19/18

(54) **METHOD OF, AND APPARATUS FOR, AND USE OF A LUBRICANT FOR CUTTING POTATOES**
VERFAHREN UND VORRICHTUNG ZUM SCHNEIDEN VON KARTOFFELN
PROCÉDÉ ET APPAREIL POUR COUPER DES POMMES DE TERRE

(30) Priority: 05.11.2013 GB 201319536
(43) Date of publication of application: 14.09.2016
(73) Proprietor: Frito-Lay Trading Company GmbH, 3011 Bern (CH)
(72) Inventor: HILLIARD, Greg, Leicester LE4 1ET (GB); STAN, Felix, Leicester LE4 1ET (GB); ENACHE, Dragos, Leicester LE4 1ET (GB); KOVALEV, Petr, Leicester LE4 1ET (GB); HENRIQUES, Jose Matias, Leicester LE4 1ET (GB)
(74) Representative: Jenkins, Peter David
(86) International application number: PCT/EP2014/073385
(87) International publication number: WO 2015/067528

(56) References cited:
- WO-A1-96/19315
- US-A- 3 280 723
- US-A- 3 750 847
- US-A1- 2009 202 694
- US-A1- 2011 023 729

## Description

The present invention relates to a method of cutting potatoes and to an apparatus for cutting potatoes.

Potatoes are cut during the manufacture of a variety of food products, such as potato chips or crisps, and French fries. The potatoes may be sliced or cut into other shapes, for example a French fry shape. There is a loss in yield associated with slicing or cutting potatoes.

During the slicing process, potatoes are fed to a slicing station where a high speed rotating slicer head, including a slicing blade, cuts the potatoes into slices. A water supply is typically used within the slicing operation to help clean the slicer head during operation and provide some form of lubrication for the cutting process.

This yield loss is caused by damage to the potato cell walls by the cutting implement which then results in starch granules being released from the cut potato surface. It is the release of these starch granules that is referred to by those skilled in the art as yield loss. Typically, during potato slicing for potato chip (crisp) manufacture, this yield loss ranges from 9% to 16 wt% of the dry weight of the potato. This can represent a significant loss in productivity, and an associated commercial loss.

There is a need in the art to achieve a reduction in the yield loss, which in turn would directly relate to a reduction in the weight of potatoes required for a given potato chip (crisp) output and therefore achieve a significant improvement in productivity.

US 3280723 discloses an apparatus for preparing potato chips comprising a slicing unit and a cooking pan.

The present invention at least partially aims to meet this need in the art.

Accordingly, the present invention provides a method of cutting potatoes into a plurality of pieces, the method comprising the steps of
(a) providing a potato to a cutting implement having a cutting edge for cutting a potato;
(b) supplying a lubricating liquid onto the cutting implement to form a liquid film over at least part of the cutting edge, the lubricating liquid comprising an aqueous dispersion of an antifoam additive; and
(c) cutting the potato using the lubricated cutting edge to cut a potato piece from the potato.

The present invention further provides an apparatus for cutting potatoes into a plurality of pieces, the apparatus comprising a liquid supply mechanism comprising a tank holding a lubricant in the form of a liquid comprising an antifoam additive, an outlet conduit from the tank communicating with an in-line mixer, a water supply conduit for supplying water to the in-line mixer, the water supply conduit communicating with the outlet conduit or an inlet side of the in-line mixer, the in-line mixer being arranged to form a lubricating fluid from the lubricant and the water, the lubricating fluid comprising an aqueous dispersion of the antifoam additive, a mixer output conduit communicating with a cutting implement and having a supply outlet for supplying the lubricating liquid from the in-line mixer onto the cutting implement to form a liquid film over at least part of a cutting edge of the cutting implement, and a second outlet conduit for the tank, the second outlet conduit communicating with a liquid inlet of a potato peeling device.

The present invention further provides the use of a blend of at least one alkylene oxide copolymer and at least one edible oil as a lubricant for cutting potatoes.

Preferred features are defined in the respective dependent claims.

In accordance with the present invention it has been found that the presence of an antifoam additive in the water applied onto the cutting implement during the cutting or slicing operation can reduce the yield loss by reducing the damage to the potato cells, with associated starch loss, during the cutting/ slicing operation. It is believed that the antifoam additive can act as a lubricant during the cutting process, which results in a smoother (and therefore less damaged) cut surface of the potato. The reduced damage to the potato cells correspondingly reduces starch loss from the cut surface.

The technical solution to the problem of reducing starch waste during the cutting process is to use, as a lubricant, an antifoam additive that is currently used in the potato chip manufacturing process for the purpose of foam suppression. Surprisingly, it has been found by the present inventors that the known antifoam additive has lubrication properties for the potato cutting operation. Since the known antifoam additive is used throughout the potato manufacturing industry, it is already known to be food safe.

In known potato processing, the antifoam additive is directly dosed into wash tanks in which the peeled potatoes are washed prior to any cutting operation. In accordance with this invention, the antifoam additive is additionally introduced into the process at the cutting operation, as well as at an upstream location, for example during the washing operation for the whole uncut potatoes.

In accordance with the present invention, the antifoam additive lubricant is applied to the cutting implement so as to be applied to the cut potato surface during the cutting operation. This provides an effective reduction in the incidence of cellular damage to the cut potato surface, with an associated reduced starch loss.

In accordance with preferred aspects of the present invention, the antifoam additive lubricant is applied at a concentration which has been found to reduce starch loss, yet with the concentration of lubricant being sufficiently low to so as to minimise the additional material cost to the production process. The increased productivity saving due to reduced starch loss from the potato cutting operation is greater that the additional material cost of the antifoam additive lubricant.

In accordance with preferred aspects of the present invention, it is readily possible to confirm that the lubricant is being applied to the cutting implement because the antifoam additive lubricant tends to form a slightly cloudy dispersion when dispersed in water at the desired concentration range. Thus it can be readily be checked visually, either by an operator or by an inspection device, that the antifoam additive lubricant is present in the aqueous dispersion at the desired concentration range.

In accordance with preferred aspects of the present invention, the antifoam additive is fed into the water feed for the potato slicers from an accurate dosing pump. Such a water feed to the slicers, but without such a lubricant additive, is present in known potato slicer arrangements. The present invention modifies the water flow by adding the lubricant additive so that the lubricant is applied directly to the cutting surface, and is therefore effective to reduce cellular damage to the potatoes, and correspondingly reduce starch losses. Since the existing water flow system only needs to be modified so that the antifoam additive is added to water upstream of the potato slicers, the invention can be readily implemented into an existing potato chip manufacturing facility at minimal additional capital cost.

In accordance with preferred aspects of the present invention, in particular in a method of producing potato slices during the manufacture of potato chips, the potato slices are conveyed to a fryer from the cutting implement. At least a part of the conveying may be carried out by a conveyor in a washing bath. The lubricating liquid from the cutting step is conveyed to the washing bath, typically together with the potato slices, so as to act as an antifoaming agent in the washing bath. Therefore the antifoaming additive provides two functions, first as a lubricant during the cutting step and second as an antifoam to prevent foam build up in the washing bath prior to frying. Preferably, the antifoam additive in the washing bath is provided only by the lubricating liquid supplied onto the cutting implement during the method of producing potato slices and subsequently conveyed to the washing bath. No further antifoam additive needs to be supplied into the washing bath.

The use of the antifoaming additive which is introduced at the cutting stage upstream of the potato slice washing stage therefore can prevent foam build-up and also provides more effective use of the antifoaming additive by additionally acting as a lubricant during the earlier cutting operation.

The method and apparatus of the present invention permit a simple set-up and implementation of the antifoam additive to achieve enhanced productivity and reduced starch losses.

The yield savings, as a result of reduced starch losses which are manifested in increased weight of the potato slices as a proportion of the input whole potato weight, have been found by the present inventors to be typically in the range of from 0.67 to 1.67 wt%, which is a weight saving based on potato dry matter content. The actual value within this range may vary dependent upon the particular antifoam concentration and potato variety.

When antifoam is added to the water feed the water becomes slightly cloudy. This cloudiness may be used as a simple way of identifying the presence of the antifoam, providing a technically simple and low cost manufacturing process and apparatus.

The introduction of the antifoam to the slicer feed water is typically in a very low concentration, typically from 250 to 750ppm by volume based on the volume of the slicer feed water. For a typical rotatable potato slicing head such a concentration corresponds to a very low feed rate of the antifoam additive lubricant, typically from 150 to 500ml/hr.

The feed of the lubricating liquid is preferably substantially continuous and at a substantially constant flow rate, in order to provide a smooth supply of lubrication to ensure that there is always antifoam lubricant present in the water feed at the slicer. Such a substantially continuous feed may be provided, for example, by a pump having a minimum of 25 pulses/ minute of pumped liquid, for example each pulse having a liquid volume of 0.4 ml.

The preferred embodiments of the present invention modify the point of antifoam introduction from the downstream process dip/ speed wash tanks to the upstream slicer water feed. No additional antifoam is required for the process. There is no effect on the product produced and antifoam is a well-known food-safe processing aid, in particular well known for use as a foam suppressant during potato chip manufacture.

An embodiment of the present invention will now be described, by way of example only, with reference to the accompanying drawings in which:

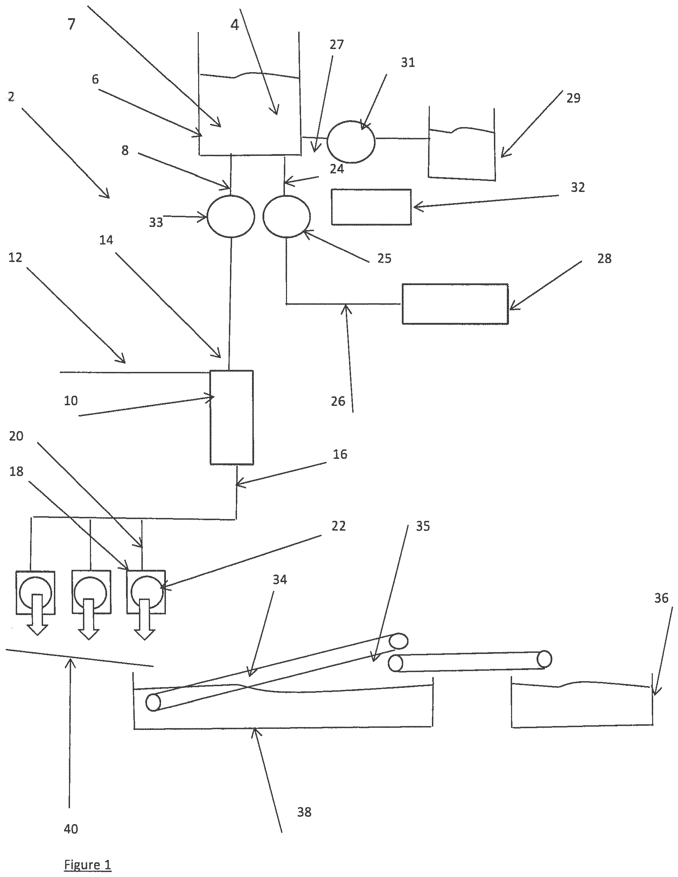

Figure 1 is a schematic side view of an apparatus for cutting potatoes into a plurality of slices during in a potato chip manufacturing line according to an embodiment of the present invention.

An embodiment of an apparatus for cutting potatoes into a plurality of slices during in a potato chip manufacturing line, according to one aspect of the present invention, is illustrated in Figure 1.

Referring to Figure 1, there is provided an apparatus, designated generally as 2, for cutting potatoes into a plurality of pieces. In this embodiment, the pieces are potato slices having a thickness of from 0.5 to 2.5 mm, optionally from 1 to 1.5 mm, for subsequent frying to manufacture potato chips (otherwise known as potato crisps).

A liquid supply mechanism 4 comprises a tank 6 for holding a lubricant 7 in the form of a liquid. The lubricant 7 comprises an antifoam additive, which comprises a blend of at least one alkylene oxide copolymer, such as an ethylene oxide/propylene oxide copolymer, and at least one edible oil, for example a vegetable oil. Such antifoam additives are known for use in potato processing and are well known *per se* in the art of potato chip manufacture.

An outlet conduit 8 from the tank 6 communicates with an in-line mixer 10. A water supply conduit 12, for supplying water to the in-line mixer 10, communicates with the outlet conduit 8 or an inlet side 14 of the in-line mixer 10. The in-line mixer 10 is arranged to form a lubricating fluid from the lubricant and the water. A mixer output conduit 16 communicates with a cutting implement 18. The mixer output conduit 16 has a supply outlet 20 for supplying the lubricating liquid from the in-line mixer 10 onto the cutting implement 18 to form a liquid film over at least part of a cutting edge 22 of the cutting implement 18.

The cutting implement 18 comprises a rotatable potato slicing head, and preferably a plurality of serially arranged cutting implements 18 are provided, each receiving a lubricant supply from the supply outlet 20.

A pump 33 is located on the outlet conduit 8 for pumping liquid therealong as a substantially continuous liquid flow, and preferably at a substantially constant flow rate.

The pump 33 is controlled to provide that the antifoam additive is present in the lubricating liquid at a desired concentration, typically from 250 to 750 ppm by volume based on the water content of the lubricating liquid.

The antifoam additive in the tank 6 is also supplied to other apparatus in the potato chip manufacturing line to function as a foam suppressor, rather than as a lubricant for the cutting implement 18. A second outlet conduit 24 from the tank 6 communicates with an antifoam supply inlet 26 of a potato peeling device 28. A pump 25 is provided on the second outlet conduit 24 for pumping the outgoing liquid at a desired flow rate. A third outlet conduit 27 from the tank 6 communicates with a fines recovery tank 29. A pump 31 is provided on the third outlet conduit 27 for pumping the outgoing liquid at a desired flow rate.

A controller 32 for the pumps 25, 31 and 33 is provided which is adapted independently to control the liquid flow along the respective conduits 8, 24 and 27 at a desired flow rate.

A conveyor 34 is provided for conveying the potato slices from an outlet of the cutting implement 18 to a fryer 36. The conveyor 34 is part of a process dip/ speed wash assembly 35 and is at least partly located in a washing bath 38. A liquid flow mechanism 40 is provided by which the lubricating liquid is conveyed from the cutting implement 18 to the washing bath 38 so as to act as an antifoaming agent in the washing bath 38. Typically, the lubricating liquid is conveyed to the washing bath 38 together with the potato slices, for example using a flume as the liquid flow mechanism 40.

The method of cutting potatoes into a plurality of pieces according to the illustrated embodiment of the present invention will now be described.

Whole potatoes are supplied to the potato peeling device 28 together with a supply of water (not shown). The potato peeling device 28 is also provided with antifoam additive from tank 6 by second outlet conduit 24 to prevent excessive foam generation in the potato peeling device 28.

The peeled potatoes are supplied to the cutting implements 18, which comprise rotatable potato slicing heads.

Lubricating liquid is supplied from supply outlet 20 onto the cutting implements 18 to form a liquid film over at least part of the cutting edges. The lubricating liquid comprises an aqueous dispersion of the antifoam additive from tank 6. The potatoes are cut using the lubricated cutting edges to cut potato slices from the potatoes.

Thereafter, the potato slices are conveyed to the fryer 36 from the cutting implements 18. The conveyor 34 in washing bath 38 is employed for at least a part of the conveying operation. The lubricating liquid from the cutting implements 18 is conveyed, together with the potato slices, to the washing bath 38 so as to act as an antifoaming agent in the washing bath 38. Preferably, the antifoam additive in the washing bath 38 is provided only by the lubricating liquid supplied onto the cutting implements 18 and subsequently conveyed to the washing bath 38.

### Examples

A number of different potato manufacturing lines were modified to incorporate antifoam addition at the cutting implements in accordance with the embodiment illustrated in Figure 1. In each case the antifoam additive was present in the lubricating liquid at a concentration of from 250 to 750 ppm by volume based on the water content of the lubricating liquid, the lubricating liquid was pumped as a substantially continuous flow and at a substantially constant flow rate onto the cutting implement, and the antifoam additive comprised a commercial antifoam additive used in potato chip manufacturing, namely a blend of at least one alkylene oxide copolymer and at least one edible oil. The potato varieties which were used varied between the different production lines.

The yield savings, as a weight percentage based on the potato dry matter, are summarised in Table 1.

**Table 1**

| | Yield saving - wt% |
|---|---|
| Example 1 | 0.73 |
| Example 2 | 0.5 - 1.0 |
| Example 3 | 0.65 |
| Example 4 | 1.2 |
| Example 5 | 0.62 |

It may be seen that the average yield saving was within the range of from 0.65 to 1.2 wt%, with an average saving of typically about 1 wt%, based on the potato dry matter.

Although the illustrated embodiment has been described with particular reference to a rotatable potato slicer head for cutting potato slices during the manufacture of potato chips, or potato crisps, the method and apparatus of the invention may be employed in any application that cuts or slices potatoes to make processed or finished food products, for example a chipping process associated with the manufacture of French fries.

Various modifications to the apparatus and method of the invention as exemplified by the illustrated embodiment will be apparent to the person skilled in the art.

## Claims

1. A method of cutting potatoes into a plurality of pieces, the method comprising the steps of:
(a) providing a potato to a cutting implement (18) having a cutting edge (22) for cutting a potato;
**characterized by** the method comprising the steps of
(b) supplying a lubricating liquid onto the cutting implement to form a liquid film over at least part of the cutting edge, the lubricating liquid comprising an aqueous dispersion of an antifoam additive; and
(c) cutting the potato using the lubricated cutting edge to cut a potato piece from the potato.

2. A method according to claim 1, wherein the potato piece is a potato slice, optionally wherein the potato slices has a thickness of from 0.5 to 2.5 mm, optionally from 1 to 1.5 mm.

3. A method according to claim 1 or claim 2, wherein the antifoam additive is present in the lubricating liquid at a concentration of from 250 to 750 ppm by volume based on the water content of the lubricating liquid.

4. A method according to any one of claims 1 to 3, wherein the lubricating liquid is pumped as a substantially continuous flow onto the cutting implement (18), optionally wherein the lubricating liquid is pumped at a substantially constant flow rate onto the cutting implement.

5. A method according to any one of claims 1 to 4, wherein the antifoam additive comprises a blend of at least one alkylene oxide copolymer and at least one edible oil.

6. A method according to any one of claims 1 to 5, which is in a method of producing potato slices during the manufacture of potato chips, wherein the method further comprises the step (d), subsequent to step (c), of conveying the potato slices to a fryer (36) from the cutting implement, the step (d) using a conveyor (34) in a washing bath (38) for at least a part of the conveying, wherein the lubricating liquid from step (c) is conveyed to the washing bath so as to act as an antifoaming agent in the washing bath, optionally (i) wherein the lubricating liquid from step (c) is conveyed to the washing bath together with the potato slices and/or (ii) wherein the antifoam additive in the washing bath is provided only by the lubricating liquid supplied onto the cutting implement during the method of producing potato slices and subsequently conveyed to the washing bath.

7. An apparatus (2) for cutting potatoes into a plurality of pieces, the apparatus comprising a liquid supply mechanism (4) comprising a tank (6) holding a lubricant (7), an outlet conduit (8) from the tank communicating with an in-line mixer (10), a water supply conduit (12) for supplying water to the in-line mixer, the water supply conduit communicating with the outlet conduit or an inlet side (14) of the in-line mixer, the in-line mixer being arranged to form a lubricating fluid from the lubricant and the water, a mixer output conduit (16) communicating with a cutting implement (18)_and having a supply outlet (20) for supplying the lubricating liquid from the in-line mixer onto the cutting implement to form a liquid film over at least part of a cutting edge (22) of the cutting implement, and a second outlet conduit (24) for the tank, the second outlet conduit communicating with a liquid inlet (26) of a potato peeling device (28), **characterised in that** the lubricant is in the form of a liquid comprising an antifoam additive and the lubricating fluid comprises an aqueous dispersion of the antifoam additive.

8. An apparatus (2) according to claim 7, wherein the cutting implement (18) comprises a rotatable potato slicing head.

9. An apparatus (2) according to claim 7 or claim 8, further comprising a first pump (33) located on the outlet conduit (8) for pumping liquid therealong as a substantially continuous liquid flow, optionally yet further comprising a controller (32) for the first pump, the controller being adapted to control the substantially continuous liquid flow along the outlet conduit at a substantially constant flow rate.

10. An apparatus (2) according to any one of claims 7 to 9, wherein the supply outlet (20) is adapted to supply the lubricating liquid from the in-line mixer (10) onto a plurality of serially arranged cutting implements (18).

11. An apparatus (2) according to any one of claims 7 to 10, wherein the cutting implement (18) is adapted to produce potato slices for the manufacture of potato chips, and the apparatus further comprises a conveyor (34) for conveying the potato slices from an outlet of the cutting implement to a fryer (36), the conveyor being at least partly located in a washing bath (38), and a liquid flow mechanism (40) by which the lubricating liquid is conveyed from the cutting implement to the washing bath so as to act as an antifoaming agent in the washing bath, optionally wherein the lubricating liquid is conveyed liquid flow mechanism to the washing bath together with the potato slices.

12. Use of a blend of at least one alkylene oxide copolymer and at least one edible oil as a lubricant (7) for cutting potatoes.

13. Use according to claim 12, wherein the potatoes are cut into potato slices, optionally wherein the potato slice has a thickness of from 0.5 to 2.5 mm, further optionally from 1 to 1.5 mm.

14. Use according to claim 12 or claim 13, wherein the blend is present in an aqueous dispersion at a concentration of from 250 to 750 ppm by volume based on the water content of the aqueous dispersion.

15. Use according to any one of claims 12 to 14, wherein the lubricant (7) is supplied as a substantially continuous flow onto a cutting implement (18), optionally wherein the lubricant is supplied at a substantially constant flow rate onto the cutting implement.

16. Use according to any one of claims 12 to 15, wherein the at least one alkylene oxide copolymer comprises an ethylene oxide/propylene oxide copolymer and the at least one edible oil comprises a vegetable oil.

## Patentansprüche

1. Ein Verfahren zum Schneiden von Kartoffeln in mehrere Stücke, wobei das Verfahren die folgenden Schritte umfasst:
(a) Zufuhr einer Kartoffel zu einem Schneidwerkzeug (18) mit einer Schneide (22) zum Schneiden einer Kartoffel;
wobei sich das Verfahren dadurch auszeichnet, dass es die folgenden Schritte umfasst:
(b) Zufuhr einer Schmierflüssigkeit auf das Schneidwerkzeug zur Bildung eines flüssigen Films über mindestens einem Teil der Schneide, wobei die Schmierflüssigkeit aus einer wässrigen Dispersion eines Schaumverhütungszusatzes besteht; und
(c) Schneiden der Kartoffel unter Nutzung der geschmierten Schneide zum Schneiden eines Kartoffelstücks von der Kartoffel.

2. Ein Verfahren gemäß Anspruch 1, wobei es sich beim Kartoffelstück um eine Kartoffelscheibe handelt und wobei die Kartoffelscheiben eine optionale Stärke von 0,5 bis 2,5 mm bzw. eine optionale Stärke von 1 bis 1,5 mm aufweisen.

3. Ein Verfahren gemäß Anspruch 1 oder Anspruch 2, wobei der Schaumverhütungszusatz in der Schmierflüssigkeit basierend auf dem Wassergehalt der Schmierflüssigkeit in einer Konzentration von 250 bis 750 Volumen-ppm vorhanden ist.

4. Ein Verfahren gemäß einem der Ansprüche 1 bis 3, wobei die Schmierflüssigkeit als im Wesentlichen kontinuierlicher Strom auf das Schneidwerkzeug (18) gepumpt wird und wobei die Schmierflüssigkeit optional mit einer im Wesentlichen konstanten Strömungsgeschwindigkeit auf das Schneidwerkzeug gepumpt wird.

5. Ein Verfahren gemäß einem der Ansprüche 1 bis 4, wobei der Schaumverhütungszusatz aus einer Mischung aus mindestens einem Alkylenoxid-Copolymer und mindestens einem Speiseöl besteht.

6. Ein Verfahren gemäß einem der Ansprüche 1 bis 5, das sich auf ein Verfahren zur Herstellung von Kartoffelscheiben während der Produktion von Kartoffelchips bezieht, wobei das Verfahren zusätzlich den nach Schritt (c) folgenden Schritt (d) umfasst, bei dem die Kartoffelscheiben vom Schneidwerkzeug zu einer Fritteuse (36) befördert werden, wobei in Schritt (d) für mindestens einen Teil der Beförderung ein Förderband (34) in einem Waschbad (38) verwendet wird, wobei die Schmierflüssigkeit von Schritt (c) zum Waschbad befördert wird, um im Waschbad als Schaumverhüter zu wirken, und wobei optional (i) die Schmierflüssigkeit von Schritt (c) zusammen mit den Kartoffelscheiben zum Waschbad befördert wird und/oder (ii) der Schaumverhütungszusatz im Waschbad nur von der Schmierflüssigkeit geliefert wird, die während des Verfahrens zur Herstellung von Kartoffelscheiben auf das Schneidwerkzeug zugeführt und anschließend zum Waschbad befördert wird.

7. Eine Vorrichtung (2) zum Schneiden von Kartoffeln in mehrere Stücke, wobei die Vorrichtung einen Mechanismus zur Flüssigkeitszufuhr (4) umfasst, bestehend aus einem Tank (6) mit einem Schmiermittel (7), einem Auslasskanal (8) vom Tank, welcher mit einem integrierten Mischer (10) verbunden ist, einem Wasserzufuhrkanal (12) zur Zufuhr von Wasser zum integrierten Mischer, wobei der Wasserzufuhrkanal mit dem Auslasskanal oder einer Einlassseite (14) des integrierten Mischers verbunden ist und wobei der integrierte Mischer so aufgebaut ist, dass er aus dem Schmiermittel und dem Wasser eine Schmierflüssigkeit bildet, einem Auslasskanal (16) vom Mischer, welcher mit einem Schneidwerkzeug (18) verbunden ist und über einen Zufuhrausgang (20) zur Zufuhr der Schmierflüssigkeit vom integrierten Mischer zum Schneidwerkzeug zur Bildung eines flüssigen Films über mindestens einem Teil einer Schneide (22) des Schneidwerkzeugs verfügt, und einem zweiten Auslasskanal (24) für den Tank, wobei der zweite Auslasskanal mit einem Flüssigkeitseingang (26) einer Kartoffelschälvorrichtung (28) verbunden ist, die sich dadurch auszeichnet, dass das Schmiermittel die Form einer Flüssigkeit mit einem Schaumverhütungszusatz aufweist ist und dass die Schmierflüssigkeit aus einer wässrigen Dispersion des Schaumverhütungszusatzes besteht.

8. Eine Vorrichtung (2) gemäß Anspruch 7, wobei das Schneidwerkzeug (18) aus einem drehbaren Kartoffelschneidkopf besteht.

9. Eine Vorrichtung (2) gemäß Anspruch 7 oder Anspruch 8, die zusätzlich eine erste Pumpe (33) umfasst, die am Auslasskanal (8) angebracht ist und Flüssigkeit als im Wesentlichen kontinuierlichen Flüssigkeitsstrom diesen Kanal entlang pumpt, wobei die erste Pumpe optional zusätzlich eine Steuerung (32) enthält, die so angepasst ist, dass sie den im Wesentlichen kontinuierlichen Flüssigkeitsstrom entlang dem Auslasskanal auf einer im Wesentlichen konstanten Strömungsgeschwindigkeit hält.

10. Eine Vorrichtung (2) gemäß einem der Ansprüche 7 bis 9, wobei der Zufuhrauslass (20) so angepasst ist, dass er die Schmierflüssigkeit vom integrierten Mischer (10) zu mehreren hintereinander angeordneten Schneidwerkzeugen (18) leitet.

11. Eine Vorrichtung (2) gemäß einem der Ansprüche 7 bis 10, wobei das Schneidwerkzeug (18) so angepasst ist, dass es Kartoffelscheiben zur Produktion von Kartoffelchips herstellt, wobei die Vorrichtung zusätzlich ein Förderband (34) zur Beförderung der Kartoffelscheiben von einem Auslass des Schneidwerkzeugs zu einer Fritteuse (36) - wobei sich das Förderband mindestens teilweise in einem Waschbad (38) befindet - sowie einen Flüssigkeitsstrommechanismus (40) umfasst, mit dem die Schmierflüssigkeit vom Schneidwerkzeug zum Waschbad befördert wird, um im Waschbad als Schaumverhüter zu wirken, wobei optional die Schmierflüssigkeit zusammen mit den Kartoffelscheiben vom Flüssigkeitsstrommechanismus zum Waschbad befördert wird.

12. Nutzung einer Mischung aus mindestens einem Alkylenoxid-Copolymer und mindestens einem Speiseöl als Schmiermittel (7) zum Schneiden der Kartoffeln.

13. Eine Nutzung gemäß Anspruch 12, wobei die Kartoffeln in Kartoffelscheiben geschnitten werden und wobei die Kartoffelscheiben eine optionale Stärke von 0,5 bis 2,5 mm bzw. eine optionale Stärke von 1 bis 1,5 mm aufweisen.

14. Eine Nutzung gemäß Anspruch 12 oder Anspruch 13, wobei die Mischung in einer wässrigen Dispersion basierend auf dem Wassergehalt der wässrigen Dispersion in einer Konzentration von 250 bis 750 Volumen-ppm vorhanden ist.

15. Eine Nutzung gemäß einem der Ansprüche 12 bis 14, wobei das Schmiermittel (7) als im Wesentlichen kontinuierlicher Strom auf ein Schneidwerkzeug (18) befördert wird und wobei das Schmiermittel optional mit einer im Wesentlichen konstanten Strömungsgeschwindigkeit auf das Schneidwerkzeug befördert wird.

16. Eine Nutzung gemäß einem der Ansprüche 12 bis 15, wobei das mindestens eine Alkylenoxid-Copolymer aus einem Ethylenoxid-Propylenoxid-Copolymer und das mindestens eine Speiseöl aus einem Pflanzenöl besteht.

## Revendications

1. Procédé pour couper des pommes de terre en une pluralité de fragments, le procédé comprenant les étapes consistant à :
(a) présenter une pomme de terre à un outil de coupe (18) doté d'un bord tranchant (22) pour couper une pomme de terre ;
**caractérisé par** le procédé comprenant les étapes consistant à :
(b) mettre du liquide lubrifiant sur l'outil de coupe pour former un film liquide sur au moins une partie du bord tranchant, le liquide lubrifiant comprenant une dispersion aqueuse d'additif antimousse ; et
(c) couper la pomme de terre à l'aide du bord tranchant lubrifié pour couper un fragment de la pomme de terre.

2. Procédé selon la revendication 1, dans lequel le fragment de pomme de terre est une tranche de pomme de terre, dans lequel éventuellement les tranches de pomme de terre ont une épaisseur allant de 0,5 à 2,5 mm, éventuellement de 1 à 1,5 mm.

3. Procédé selon, soit la revendication 1, soit la revendication 2, dans lequel l'additif antimousse est présent dans le liquide antimousse à une concentration de 250 à 750 ppm par volume d'après la teneur en eau du liquide lubrifiant.

4. Procédé selon l'une quelconque des revendications 1 à 3, dans lequel le liquide lubrifiant est pompé sous forme d'un flux essentiellement continu dans l'outil de coupe (18), dans lequel éventuellement le liquide lubrifiant est pompé à un débit essentiellement continu dans l'outil de coupe.

5. Procédé selon l'une quelconque des revendications 1 à 4, dans lequel l'additif antimousse comprend un mélange d'au moins un copolymère d'oxyde d'alkylène et d'au moins une huile alimentaire.

6. Procédé selon l'une quelconque des revendications 1 à 5, qui appartient à un procédé de production de tranches de pomme de terre utilisé au cours de la fabrication de croustilles, dans lequel le procédé comprend en outre l'étape (d), consécutive à l'étape (c), consistant à transférer les tranches de pomme de l'outil de coupe de pomme de terre à une friteuse (36), l'étape (d) à l'aide d'une transporteuse (34) dans un bain de lavage (38) pendant au moins une partie du transport, dans lequel le liquide lubrifiant cité à l'étape (c) est envoyé dans le bain de lavage où il agit en tant qu'agent antimousse, éventuellement (i) dans lequel le liquide lubrifiant cité à l'étape (c) est envoyé dans le bain de lavage en même temps que les tranches de pomme de terre et/ou (ii), dans lequel l'additif antimousse, que contient le bain de lavage provient uniquement du liquide lubrifiant appliqué sur l'outil de coupe au cours du procédé de production des tranches de pomme de terre, est ensuite envoyé dans le bain de lavage.

7. Appareil (2) pour couper des pommes de terre en une pluralité de fragments, l'appareil comprenant un mécanisme d'amenée de liquide (4) doté d'un réservoir (6) contenant un lubrifiant (7), d'un conduit de sortie (8) du réservoir communiquant avec un mélangeur en ligne (10), d'un conduit d'amenée d'eau (12) pour alimenter en eau le mélangeur en ligne, le conduit d'amenée d'eau communiquant avec le conduit de sortie ou un côté d'entrée (14) du mélangeur en ligne, le mélangeur en ligne étant agencé de sorte à former un fluide lubrifiant à partir du lubrifiant et de l'eau, d'un conduit de sortie du mélangeur (16) communiquant avec un outil de coupe (18) et comportant une sortie d'amenée (20) pour alimenter le liquide lubrifiant du mélangeur en ligne jusqu'à l'outil de coupe pour former un film liquide sur au moins une partie d'un outil de coupe (22) de l'outil de coupe, et d'un deuxième conduit de sortie (24) pour le réservoir, le deuxième conduit de sortie communiquant avec une entrée de liquide (26) d'un dispositif d'épluchage de pommes de terre (28), **caractérisé en ce que** le lubrifiant se présente sous la forme d'un liquide contenant un additif antimousse et le fluide lubrifiant comprend une dispersion aqueuse de l'additif antimousse.

8. Appareil (2) selon la revendication 7, dans lequel l'outil de coupe (18) comprend une tête de découpage en tranches de pommes de terre rotative.

9. Appareil (2) selon, soit la revendication 7, soit la revendication 8, comprenant en outre une première pompe (33), située sur le conduit de sortie (8) pour pomper le liquide le long de celui-ci sous la forme d'un flux liquide essentiellement continu, éventuellement comprenant encore en outre un contrôleur (32) pour la première pompe, le contrôleur étant adapté de sorte à contrôler le flux liquide essentiellement continu le long du conduit de sortie à un débit essentiellement constant.

10. Appareil (2) selon l'une quelconque des revendications 7 à 9, dans lequel la sortie d'amenée (20) est adaptée de sorte à alimenter le liquide lubrifiant du mélangeur en ligne (10) vers une pluralité d'outils de coupe disposés en série (18).

11. Appareil (2), selon l'une quelconque des revendications 7 à 10, dans lequel l'outil de coupe (18) est adapté de sorte à produire des tranches de pomme de terre pour la fabrication de croustilles, et l'appareil comprend en outre une transporteuse (34) pour transférer les tranches de pomme d'une sortie de l'outil de coupe de pommes de terre à une friteuse (36), la transporteuse étant au moins en partie située dans un bain de lavage (38), ainsi qu'un mécanisme d'amenée de liquide (40) au moyen duquel le liquide lubrifiant est transporté de l'outil de coupe au bain de lavage de sorte à agir en tant qu'agent antimousse dans le bain de lavage, éventuellement dans lequel le liquide lubrifiant est transporté par le mécanisme d'amenée de liquide jusqu'au bain de lavage avec les tranches de pomme de terre.

12. Emploi d'un mélange d'au moins un copolymère d'oxyde d'alkylène et d'au moins une huile alimentaire, en tant que lubrifiant (7) pour couper les pommes de terre.

13. Emploi selon la revendication 12, dans lequel les pommes de terre sont coupées en tranches de pomme de terre, dans lequel éventuellement les tranches de pomme de terre ont une épaisseur allant de 0,5 à 2,5 mm, en outre éventuellement de 1 à 1,5 mm.

14. Procédé selon, soit la revendication 12, soit la revendication 13, dans lequel le mélange est présent dans une dispersion aqueuse à une concentration de 250 à 750 ppm par volume d'après la teneur en eau de la dispersion aqueuse.

15. Emploi selon l'une quelconque des revendications 12 à 14, dans lequel le lubrifiant (7) est alimenté sous forme d'un flux essentiellement continu dans l'outil de coupe (18), dans lequel éventuellement le lubrifiant est alimenté à un débit essentiellement constant dans l'outil de coupe.

16. Emploi selon l'une quelconque des revendications 12 à 15, dans lequel au moins un copolymère d'oxyde d'alkylène comprend un copolymère d'oxyde d'éthylène/d'oxyde de propylène et au moins l'huile alimentaire comprend une huile végétale.
